(19) Europäisches Patentamt
European Patent Office
Office européen des brevets

(11) **EP 2 566 743 B1**

(12) **EUROPÄISCHE PATENTSCHRIFT**

(45) Veröffentlichungstag und Bekanntmachung des Hinweises auf die Patenterteilung:
**23.07.2014 Patentblatt 2014/30**

(21) Anmeldenummer: **10779275.6**

(22) Anmeldetag: **04.11.2010**

(51) Int Cl.:
*B62D 6/00* *(2006.01)*     *B62D 121/00* *(2006.01)*
*B62D 137/00* *(2006.01)*

(86) Internationale Anmeldenummer:
**PCT/EP2010/066795**

(87) Internationale Veröffentlichungsnummer:
**WO 2011/137940 (10.11.2011 Gazette 2011/45)**

(54) **VERFAHREN ZUM GENERIEREN VON DEN FAHRZUSTAND EINES KRAFTFAHRZEUGS BESCHREIBENDEN SIGNALEN**

METHOD FOR GENERATING SIGNALS THAT DESCRIBE THE DRIVING STATE OF A MOTOR VEHICLE

PROCÉDÉ DE GÉNÉRATION DE SIGNAUX DÉFINISSANT LA SITUATION DE CONDUITE D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.05.2010 DE 102010028547**

(43) Veröffentlichungstag der Anmeldung:
**13.03.2013 Patentblatt 2013/11**

(73) Patentinhaber: **ZF-Lenksysteme GmbH 73527 Schwäbisch Gmünd (DE)**

(72) Erfinder:
• **GREUL, Roland 73525 Schwäbisch Gmünd (DE)**
• **SPRINZL, Michael 73079 Süßen (DE)**

(56) Entgegenhaltungen:
**WO-A1-03/024767     DE-A1-102006 036 985**

EP 2 566 743 B1

**Beschreibung**

Die Erfindung betrifft ein Verfahren zum Generieren von den Zustand eines Kraftfahrzeugs beschreibenden Signalen, eine Anordnung sowie ein Computerprogramm und ein Computerprogrammprodukt zur Durchführung des Verfahrens.

Für Eingriffe von Fahrdynamikregelsystemen, wie bspw. einem ESP, ist die Beurteilung des Fahrzustands zwingend notwendig. Dazu wird in der Regel eine Referenzgröße berechnet und mit der Istgröße verglichen. Zu dieser Berechnung werden Sensorinformationen, wie beispielsweise die Gierrate und die Querbeschleunigung, benötigt. Wenn diese Sensorsignale fehlerbehaftet sind, kommt es zu Fehlern in der Fahrzustandsbeurteilung und damit auch zu Fehleingriffen der Regelsysteme.

Um dies zu vermeiden, ist die Absicherung dieser Signale zwingend erforderlich. Deshalb wird bezüglich der Hardware mindestens ein Sensor redundant ausgeführt, beispielsweise der Gierratensensor im ESP-System. Dadurch kann man die beiden Kanäle vergleichen und bei einer unplausiblen Abweichung das Signal als fehlerhaft kennzeichnen und so Fehleingriffe verhindern. Entsprechend kann mit dem Sensorsignal der Querbeschleunigung verfahren werden.

Fahrzustände sind bspw. ein Übersteuern und ein Untersteuern, die bislang mit Hilfe eines Fahrmodells ermittelt werden.

Aus der Druckschrift DE 10 2006 036 751 A1 ist ein Verfahren zur Regelung zumindest einer Fahrzustandsgröße eines Fahrzeugs bekannt. Bei diesem wird die Seitenführungskraft gemäß einem vorgegebenen kinematischen Zusammenhang als Funktion der Zahnstangenkraft ermittelt. Die Zahnstangenkraft wiederum wird als Funktion der im Lenksystem wirkenden Lenkmomente berechnet.

Ein weiteres Verfahren ist in der DE 10 2006 036 985 A1 beschrieben. In dieser Schrift wird ein Verfahren zum Generieren von den Fahrzustand beschreibenden Signalen eines Kraftfahrzeugs, das typischerweise mit einem Fahrdynamikregelsystem ausgestattet ist, vorgestellt.

Hierbei wird mittels eines Fahrzustandsbeobachters anhand gemessener Eingangsgrößen und eines hinterlegten Fahrzeugmodells eine schätzende Berechnung einer die Querdynamik des Fahrzeugs beschreibenden Zustandsgröße, die nicht ausschließlich eine Bewegung des Fahrzeugs in Längsrichtung beschreibt, vorgenommen. Im Wesentlichen wird zunächst auf eine Spurstangenkraft geschlossen, anhand der im Folgenden querdynamische Größen abgeleitet werden oder mit gemessenen querdynamischen Größen plausibilisiert werden.

Vor diesem Hintergrund ist es die Aufgabe vorliegender Erfindung, weitere vorteilhafte Anwendungsfälle vorzuschlagen.

Insbesondere betrifft die Erfindung die Bestimmung eines physikalischen Nachlaufs, eines Wankwinkels oder eines Wankmoments oder der Querneigung einer Fahrbahn.

Querdynamische Größen sind bspw. die Querbeschleunigung und die Gierrate. Dabei können querdynamische Größen an der Vorderachse abgeleitet werden und zudem eine Umrechnung auf den Fahrzeugschwerpunkt erfolgen.

Die Zahnstangenkraft, die die Summe der im Lenksystem wirkenden Kräfte darstellt, kann als Funktion der im Lenksystem wirkenden Momente berechnet werden. Die Seitenführungskraft an der Vorderachse kann wiederum aus einem vorgegebenen, kinematischen Zusammenhang als Funktion der Zahnstangenkraft des Lenksystems ermittelt werden. Auf diese Weise wird ein Zusammenhang zwischen den Lenkmomenten im Lenksystem und der Seitenführungskraft bzw. der Rückstellmomente geschaffen. Diese Information kann unter Nutzung weiterer Signale bspw. zur Plausibilisierung der Sensorgrößen verwendet werden.

Wie bereits erwähnt wurde, bietet es sich bei dem Verfahren an, die Zahnstangenkraft zur Plausibilisierung von Werten bzw. Signalen, die von Sensoren erfasst werden, insbesondere bei Geschwindigkeiten von mehr als 30 km/h mit unabhängigen Signalen aus dem Lenksystem, heranzuziehen.

Das Verfahren ermöglicht dabei eine Einsparung der Kosten durch Vermeiden einer redundanten Sensorik und eine Erhöhung der Signalsicherheit.

Alternativ kann die Zahnstangenkraft zum Bestimmen eines Nachlaufs herangezogen werden. Hierzu wird auf die nachstehende Gleichung 8 verwiesen.

Weiterhin kann das Verfahren zum Erkennen einer Sondersituation, wie bspw. das seitenkraftfreie Durchfahren einer Steilkurve, eingesetzt werden. Weiterhin bietet das vorgestellte Verfahren einen Ansatz zur Bestimmung des Wankwinkels des Fahrzeugaufbaus und einen Ansatz zur Bestimmung der Querneigung der Fahrbahn.

Da die Bewegung des Fahrzeugaufbaus verzögert erfolgt, kann durch die Umrechnung aus Zahnstangenkraft Zeit gewonnen werden und es können ggf. präventive Eingriffe vorgenommen werden.

Das beschriebene Verfahren, das bspw. zur Plausibilisierung von Sensorinformationen verwendet wird, eignet sich grundsätzlich für den Einsatz in Lenksystemen, insbesondere für EPS-Systeme (EPS: Electric Power Steering). EPS-Systeme weisen regelmäßig Mittel zur Einleitung eines Zusatzmoments, bspw. einen Elektromotor, Mittel zur Ansteuerung des Elektromotors, Mittel zur Erfassung der Phasenströme bzw. des Motormoments, Mittel zur Erfassung der Rotorposition, Mittel zur Erfassung des Handmoments und Mittel zur Abschätzung der Zahnstangenkraft auf.

Das Verfahren kann jedoch in jedem beliebigen Lenksystem umgesetzt werden. Dies erfolgt in der Regel unter Verwendung von Sensoren zur Ermittlung der Zahnstangenkraft und Sensoren zur Ermittlung des Ritzelwinkels (indirekt auch über den Lenkradwinkel).

Es wird weiterhin eine Anordnung zum Generieren von den Fahrzustand beschreibenden Signalen eines Kraftfahrzeugs, das mit einem Fahrdynamikregelsystem ausgestattet ist, vorgestellt, wobei die Anordnung dazu ausgebildet ist, die Zahnstangenkraft zu berechnen. Die Anordnung ist weiterhin dazu ausgebildet, unter Nutzung weiterer Signale querdynamische Größen abzuleiten.

In Ausgestaltung ist die Anordnung dazu ausgebildet, die Zahnstangenkraft zur Plausibilisierung von Werten bzw. Signalen, die von Sensoren erfasst werden, heranzuziehen.

Weiterhin kann die Anordnung dazu ausgebildet sein, Größen bzw. Signale eines Sensors zu erfassen und auf Grundlage der erfassten Signale einen Nachlauf zu bestimmen.

Es wird zudem ein Lenksystem vorgestellt, das eine Anordnung der vorstehend beschriebenen Art aufweist.

Die Erfindung betrifft weiterhin ein Computerprogramm mit Programmcodemitteln, um ein Verfahren zum Einstellen des Zustands des Kraftfahrzeugs der vorstehend beschriebenen Art durchzuführen, wenn das Computerprogramm auf einem Mikroprozessor eines Computers ausgeführt wird.

Das Computerprogramm kann auf einem computerlesbaren Datenträger, wie beispielsweise Diskette, CD, DVD, Festplatte, USB Memory Stick o.ä., oder einem Internetserver als Computerprogrammprodukt gespeichert sein und von dort aus in das Speicherelement eines Steuergeräts übertragen werden.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im folgenden unter Bezugnahme auf die Zeichnung ausführlich beschrieben.

Figur 1     zeigt in schematischer Darstellung eine Ausführungsform des beschriebenen Lenksystems.

Figur 2     zeigt Kräfte an einem Vorderrad.

Figur 3     zeigt den Zusammenhang von querdynamischen Größen.

Figur 4     verdeutlicht einen Wankwinkel eines Kraftfahrzeugs.

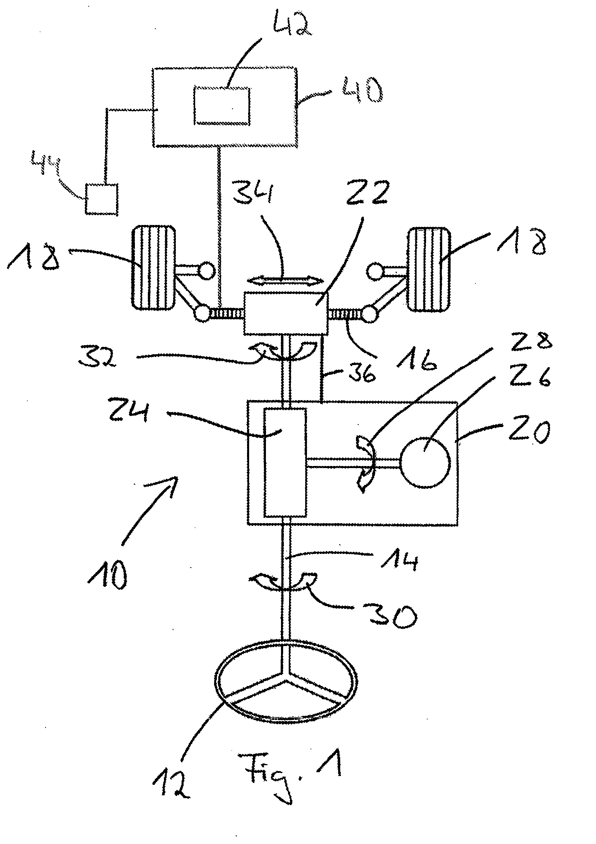

In Figur 1 ist eine Ausführungsform eines Lenksystems, insgesamt mit der Bezugsziffer 10 versehen, schematisch dargestellt. Dieses umfasst eine Lenkhandhabe 12, eine Lenkstange 14 und eine Zahnstange 16, über die zwei dargestellte Vorderräder 18 angelenkt werden.

Das Lenksystem 10 umfasst zusätzlich eine Einrichtung 20 zur Bereitstellung einer Aktivlenkung (AFS) und eine Einrichtung 22 zur Bereitstellung einer Hilfskraftlenkung (EPS). Die Aktivlenkung bewirkt eine Winkelüberlagerung, die Hilfskraftlenkung verursacht eine Momentenüberlagerung. Die Einrichtung 20 für die Aktivlenkung umfasst ein Getriebe 24 und einen Motor 26 zur Bereitstellung eines Überlagerungswinkels $\delta_M$ (Pfeil 28), der mit Hilfe des Getriebes 24 einem an der Lenkhandhabe 12 eingestellten Lenkradwinkel $\delta_S$ (Pfeil 30) überlagert wird. Hieraus ergibt sich der Ritzelwinkel $\delta_G$ (Pfeil 32), der an die Zahnstange 16 gegeben wird.

Es gilt:

$$\delta_G = 1/i_1 * \delta_S + 1/i_2 * \delta_M \qquad\qquad \text{(Gleichung 1)}$$

i stellt ein Maß für die Getriebeübersetzung dar.

Die Einrichtung 22 für die EPS bringt je nach Bedarf ein Zusatzmoment auf, so dass eine Kraft $F_G$ (Pfeil 34) auf die Zahnstange 16 übertragen wird.

Die Einrichtung 20 und die Einrichtung 22 sind über ein Bussystem 36 miteinander verbunden, so dass Informationen ausgetauscht werden können, um flexibel auf unterschiedliche Fahrbedingungen reagieren zu können.

Weiterhin ist eine Anordnung 40 zur Ermittlung bzw. Berechnung der Zahnstangenkraft vorgesehen. Hierzu verfügt die Anordnung 40 über eine Recheneinrichtung 42. Weiterhin kann die Anordnung 40 auf einen Sensor 44, der querdynamische Größen aufnimmt, zugreifen.

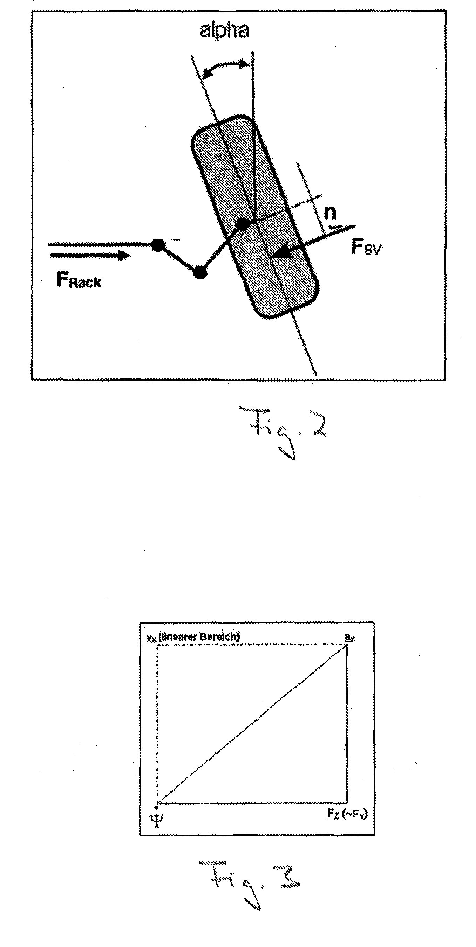

Nachfolgend sind in Verbindung mit den Figuren 2 bis 4 und den nachfolgenden Gleichungen Größen bei einem Kraftfahrzeug illustriert. Dabei ist:

$F_{SH}$     Seitenkraft an der Hinterachse
$F_{SV}$     Seitenkraft an der Vorderachse

$F_Y$      Seitenkraft im Fahrzeugschwerpunkt

$F_{Hub}$    Kraftkomponente, die eine einseitige Anhebung des Fahrzeugs bewirkt (Achskinematik)

$F_\varphi$      Kraftkomponente, die eine Wankbewegung des Fahrzeugaufbaus bewirkt

$F_{Rack}$   Zahnstangenkraft

$\delta_v$      Lenkwinkel an der Vorderachse

n      Nachlauf

$a_{Y*}$     Querbeschleunigung, berechnet aus Zahnstangenkraft

$a_{YMess}$   gemessene Querbeschleunigung

$J_Z$      Massenträgheitsmoment des Fahrzeugaufbaus um die z-Achse

$l_v$      horizontaler Abstand des Schwerpunkts von der Vorderachse

$l_h$      horizontaler Abstand des Schwerpunkts von der Hinterachse

$\ddot{\Psi}$      Gierbeschleunigung

$\varphi$      Wankwinkel des Fahrzeugaufbaus

$J_Z$      Massenträgheitsmoment um die Fahrzeughochachse

$J_X$      Massenträgheitsmoment um die Fahrzeuglängsachse

Nunmehr wird die Berechnung einer Sensorgröße aus den im Lenksystem wirkenden Momenten gezeigt. Figur 2 verdeutlicht hierzu an einem Vorderrad wirkende Kräfte.

Im folgenden wird die Kräfte- und Momentenbilanz aufgestellt. Nach dem linearen Einspurmodell nach Rieckert Schunck gilt:

$$F_{SH} + F_{SV} * \cos \delta_v - m * a_{Y*} = 0 \qquad \text{(Gleichung 2)}$$

$$-F_{SH} * l_h + F_{SV} * \cos \delta_v * l_v - J_Z * \ddot{\Psi} = 0 \qquad \text{(Gleichung 3)}$$

Gleichung 3 nach $F_{SH}$ aufgelöst und in Gleichung 2 eingesetzt ergibt:

$$F_{SV} = \frac{\dfrac{J_Z * \ddot{\Psi}}{l_h} + m * a_{Y*}}{\cos \delta_v * \left(\dfrac{l_v}{l_h} + 1\right)} \qquad \text{(Gleichung 4)}$$

Diese Gleichung umgestellt ergibt:

$$a_{Y*} = \frac{1}{m} * \left(F_{SV} * \cos \delta_v * \left(\frac{l_v}{l_h} + 1\right) - \frac{J_Z * \ddot{\Psi}}{l_h}\right) \qquad \text{(Gleichung 5)}$$

Im statischen Kräftegleichgewicht gilt:

$$F_{RACK} = f(k1) * f(k2) * F_{SV} + f(k3)F_{HUB} \qquad \text{(Gleichung 6)}$$

f(k1) bezeichnet hier eine Funktion, welche die Spurstangengeometrie von der Zahnstange auf den Radanlenkungspunkt der gelenkten Räder berücksichtigt, welche ggf. als Kennlinie vorliegen kann. Die Funktion f(k1) ist abhängig vom Zahnstangenweg. Dieser kann aus dem Ritzelwinkel bestimmt werden, der durch Messung des Lenkradwinkels oder der Rotorposition des EPS-Motors berechnet werden kann oder direkt gemessen wird.

f(k2) bezeichnet hier eine Funktion, die den physikalischen Nachlauf darstellt und als Kennlinie oder als Ergebnis eines Schätzalgorithmus vorliegt.

f(k3) bezeichnet hier eine Funktion, die den Anteil der Kraft zur einseitigen Anhebung des Fahrzeugs auf Grund der Achseigenschaften beschreibt.

Gleichung 6 nach $F_{SV}$ umgestellt ergibt:

$$F_{SV} = \frac{F_{RACK} - f(k3) * F_{HUB}}{f(k1) * f(k2)} \qquad \text{(Gleichung 7)}$$

Gleichung 7 in Gleichung 5 eingesetzt ergibt:

$$a_{Y*} = \frac{1}{m} * \left( \frac{(F_{RACK} - f(k3) * F_{HUB})}{f(k1) * f(k2)} * \cos\delta * \left( \frac{l_v}{l_h} + 1 \right) - \frac{J_z * \ddot{\Psi}}{l_h} \right) \qquad \text{(Gleichung 8)}$$

Damit erhält man die Seitenkraft bzw. die dazu erforderliche Querbeschleunigung unter Nutzung der geschätzten Zahnstangenkraft, der Gierbewegung und der Achsgeometrieeigenschaften des Fahrzeugs.

Soll der Nachlauf ermittelt werden, muss die Gleichung 8 nach f(k2) aufgelöst werden. $a_{Y*}$ muss dann durch das Messsignal $a_{Ymess}$ ersetzt werden.

Da die Aufbaubewegung des Fahrzeugs verzögert erfolgt, muss die aus Zahnstangenkraft berechnete Querbeschleunigung mit einer Totzeit beaufschlagt werden, um das Messsignal mit dieser Größe zu vergleichen. Diese Eigenschaft bietet zudem die Möglichkeit, etwas Zeit zu gewinnen und eventuell präventive Maßnahmen einzuleiten.

$$a_{Ymess}(t) = a_{Y*}(t - T_t) \qquad \text{(Gleichung 9)}$$

Die beschriebenen Formeln lassen sich umformen, so dass analog dazu auch die Gierrate berechnet werden kann. Die Größen Querbeschleunigung, Gierrate und Seitenkraft (wie gezeigt berechenbar aus der Zahnstangenkraft) stehen in einer Dreiecksbeziehung zueinander und können ineinander umgerechnet werden. Im linearen Bereich, der den überwiegenden Bereich während der Betriebsdauer eines Fahrzeugs darstellt, kann zudem eine Viereckbeziehung, unter Einbeziehung der Fahrzeuggeschwindigkeit, zur Plausibilisierung genutzt werden.

Der Zusammenhang der querdynamischen Größen ist in Figur 3 dargestellt.

Es besteht weiterhin die Möglichkeit, Fehleingriffe in Sondersituationen, wie z.B. das seitenkraftfreie Durchfahren einer Steilwandkurve, zu erkennen. Die aus den im Lenksystem wirkenden Momenten berechnete Seitenkraft wird in diesem Fall korrekterweise einen Wert 0 anzeigen, während der Querbeschleunigungssensor des Fahrzeugs einen Anteil der Gewichtskraft und damit einen Wert ungleich 0 anzeigt.

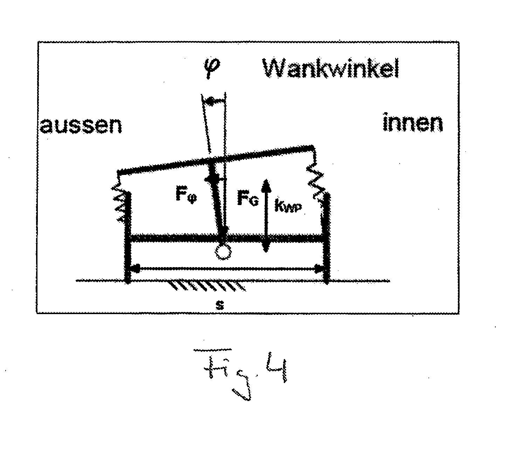

Die Berechnung eines Wankwinkels aus den im Lenksystem wirkenden Momenten wird anhand Figur 4 verdeutlicht.

In Serienfahrzeugen gibt es weitgehend keine Sensorik zur Messung des Wankwinkels. Diese Größe ist jedoch von Bedeutung sowohl zur Beurteilung der Radlastdifferenzen und damit der Einschätzung der Potentiale der einzelnen Räder für Fahrdynamikeingriffe durch bspw. Lenk- und Bremssysteme als auch zur Abschätzung des Überschlagrisikos.

Durch die Seitenkraft ergibt sich ein Wankmoment, das eine Aufbaubewegung bewirkt. Die Ausprägung dieser Bewegung wird durch den Wankwinkel φ angegeben. Zur Berechnung des Wankmoments wird die korrigierte Querbeschleunigung verwendet.

$$M_{\varphi} = m * a_{y*} * k_{WP} \qquad \text{(Gleichung 10)}$$

Der Wankwinkel kann durch Aufstellen der Momentenbilanz und Auflösung der folgenden Beziehung nach φ in Gleichung 11 bestimmt werden:

$$J_X * \ddot{\varphi} = F_{ZL} * \frac{s}{2} - F_{ZR} * \frac{s}{2} + m * a_{Y*} * k_{WP} \qquad \text{(Gleichung 11)}$$

mit

$$F_{ZL(bzw.R)} = f(\varphi, \dot{\varphi}) \qquad \text{(Gleichung 12)}$$

Nachfolgend wird die Berechnung der Querneigung der Fahrbahn verdeutlicht. Ein Maß für die Querneigung der Fahrbahn kann aus der Gleichung 11 bestimmt werden, indem die Differenz des Wankwinkels aus

$$J_X * \ddot{\varphi} = F_{ZL} * \frac{s}{2} - F_{ZR} * \frac{s}{2} + m * a_{Y*} * k_{WP} \qquad \text{(Gleichung 11)}$$

$$J_X * \ddot{\varphi} = F_{ZL} * \frac{s}{2} - F_{ZR} * \frac{s}{2} + m * a_{Ymess} * k_{WP} \qquad \text{(Gleichung 11a)}$$

bestimmt wird.

**Patentansprüche**

1. Verfahren zum Generieren von den Fahrzustand beschreibenden Signalen eines Kraftfahrzeugs, das mit einem Fahrdynamikregelsystem ausgestattet ist, bei dem die Zahnstangenkraft ($F_{Rack}$) berechnet wird und unter Nutzung weiterer Signale querdynamische Größen abgeleitet werden,
**dadurch gekennzeichnet, dass**
ein physikalischer Nachlauf (n) unter Verwendung der berechneten Zahnstangenkraft ($F_{Rack}$) und einer gemessenen Querbeschleunigung ($a_{Ymess}$) und der Gierrate bestimmt wird.

2. Verfahren zum Generieren von den Fahrzustand beschreibenden Signalen eines Kraftfahrzeugs, das mit einem Fahrdynamikregelsystem ausgestattet ist, bei dem die Zahnstangenkraft ($F_{Rack}$) berechnet wird und unter Nutzung weiterer Signale querdynamische Größen abgeleitet werden,
**dadurch gekennzeichnet, dass**
ein Wankwinkel oder ein Wankmoment unter Verwendung einer aus der berechneten Zahnstangenkraft ($F_{Rack}$) ermittelten Querbeschleunigung ($a_{Y*}$) und unter Verwendung eines Modells zur Beschreibung einer Aufbaubewegung bestimmt wird.

3. Verfahren zum Generieren von den Fahrzustand beschreibenden Signalen eines Kraftfahrzeugs, das mit einem Fahrdynamikregelsystem ausgestattet ist, bei dem die Zahnstangenkraft ($F_{Rack}$) berechnet wird und unter Nutzung weiterer Signale querdynamische Größen abgeleitet werden,
**dadurch gekennzeichnet, dass**
eine Querneigung der Fahrbahn unter Verwendung eines Modells zur Beschreibung einer Aufbaubewegung, welches eine Differenz aus einer gemessenen Querbeschleunigung ($a_{Ymess}$) und einer aus der berechneten Zahnstangenkraft ermittelten Querbeschleunigung ($a_{Y*}$) beinhaltet, ermittelt wird.

4. Anordnung, insbesondere ein Lenksystem, zum Generieren von den Fahrzustand beschreibenden Signalen eines Kraftfahrzeugs, das mit einem Fahrdynamikregelsystem ausgestattet ist, wobei die Anordnung (40) dazu ausgebildet ist, ein Verfahren gemäß einem der Ansprüche 1 bis 3 durchzuführen.

5. Computerprogramm mit Programmcodemitteln, um ein Verfahren nach einem der Ansprüche 1 bis 3 durchzuführen, wenn das Computerprogramm auf einem Mikroprozessor eines Computers, insbesondere in einer Anordnung (40) nach Anspruch 4, ausgeführt wird.

6. Computerprogrammprodukt mit Programmcodemitteln, die auf einem computerlesbaren Datenträger gespeichert sind, um ein Verfahren nach einem der Ansprüche 1 bis 3 durchzuführen, wenn das Computerprogramm auf einem Mikroprozessor eines Computers, insbesondere in einer Anordnung (40) nach Anspruch 4, ausgeführt wird.

**Claims**

1. Method for generating signals which describe the driving state of a motor vehicle which is equipped with a vehicle movement dynamics control system, in which method the toothed rack force ($F_{Rack}$) is calculated, and lateral dynamics variables are derived using further signals,
**characterized in that**
a physical run-on (n) is determined using the calculated toothed rack force ($F_{Rack}$) and a measured lateral acceleration ($a_{Ymeas}$) and the yaw rate.

2. Method for generating signals which describe the driving state of a motor vehicle which is equipped with a vehicle movement dynamics control system, in which method the toothed rack force ($F_{Rack}$) is calculated and lateral dynamics variables are derived using further signals,
**characterized in that**
a rolling angle and a rolling torque are determined using a lateral acceleration ($a_{Y*}$) determined from the calculated toothed rack force ($F_{Rack}$) and using a model for describing movement of the vehicle body.

3. Method for generating signals which describe the driving state of a motor vehicle which is equipped with a vehicle movement dynamics control system, in which method the toothed rack force ($F_{Rack}$) is calculated and lateral dynamics variables are derived using further signals,
**characterized in that**
a lateral inclination of the carriageway using a model for describing a movement of the vehicle body, which model includes a difference comprising a measured lateral acceleration ($a_{Ymeas}$) and a lateral acceleration ($a_{Y*}$) determined from the calculated toothed rack force, is determined.

4. Arrangement, in particular a steering system, for generating signals which describe the driving state of a motor vehicle which is equipped with a vehicle movement dynamics control system, wherein the arrangement (40) is designed to carry out a method according to one of Claims 1 to 3.

5. Computer program having program code means for carrying out a method according to one of Claims 1 to 3, when the computer program is run on a microprocessor of a computer, in particular in an arrangement (40) according to Claim 4.

6. Computer program product having program code means which are stored on a computer-readable data carrier in order to carry out a method according to one of Claims 1 to 3 when the computer program is run on a microprocessor of a computer, in particular in an arrangement (40) according to Claim 4.

**Revendications**

1. Procédé de production de signaux décrivant l'état de roulage d'un véhicule automobile équipé d'un système de régulation de la dynamique de roulage, dans lequel la force ($F_{Rack}$) exercée sur la crémaillère est calculée et des grandeurs de dynamique transversale sont dérivées en recourant à d'autres signaux,
   **caractérisé en ce que**
   une inertie physique (n) est déterminée en recourant à la force ($F_{Rack}$) calculée appliquée sur la crémaillère, à l'accélération transversale ($a_{Ymess}$) mesurée et à la vitesse de lacet.

2. Procédé de production de signaux décrivant l'état de roulage d'un véhicule automobile équipé d'un système de régulation de la dynamique de roulage, dans lequel la force ($F_{Rack}$) exercée sur la crémaillère est calculée et des grandeurs de dynamique transversale sont dérivées en recourant à d'autres signaux,
   **caractérisé en ce que**
   l'angle de roulis ou le couple de roulis sont déterminés en recourant à l'accélération transversale ($a_{Y*}$) déterminée à partir de la force calculée ($F_{Rack}$) appliquée sur la crémaillère et en recourant à un modèle qui décrit le déplacement du châssis.

3. Procédé de production de signaux décrivant l'état de roulage d'un véhicule automobile équipé d'un système de régulation de la dynamique de roulage, dans lequel la force ($F_{Rack}$) exercée sur la crémaillère est calculée et des grandeurs de dynamique transversale sont dérivées en recourant à d'autres signaux,
   **caractérisé en ce que**
   l'inclinaison transversale de la chaussée est déterminée en recourant à un modèle qui décrit le déplacement du châssis et qui contient la différence entre l'accélération transversale ($a_{Ymess}$) mesurée et l'accélération transversale ($a_{Y*}$) calculée déterminée à partir de la force appliquée sur la crémaillère.

4. Ensemble, en particulier système de braquage, destiné à produire des signaux qui décrivent l'état de roulage d'un véhicule automobile équipé d'un système de régulation de la dynamique de roulage, l'ensemble (40) étant configuré pour exécuter un procédé selon l'une des revendications 1 à 3.

5. Programme informatique doté de moyens de code de programme qui permettent d'exécuter un procédé selon l'une des revendications 1 à 3 lorsque le programme informatique est exécuté sur le microprocesseur d'un ordinateur, en particulier dans un ensemble (40) selon la revendication 4.

6. Produit de programme informatique doté de moyens de code de programme conservés sur un support de données lisibles par ordinateur pour exécuter un procédé selon l'une des revendications 1 à 3 lorsque le programme informatique est exécuté sur le microprocesseur d'un ordinateur, en particulier dans un ensemble (40) selon la revendication 4.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006036751 A1
- DE 102006036985 A1